(19) Europäisches Patentamt
European Patent Office
Office européen des brevets

(11) **EP 3 912 914 B1**

(12) **EUROPEAN PATENT SPECIFICATION**

(45) Date of publication and mention of the grant of the patent:
**21.06.2023 Bulletin 2023/25**

(21) Application number: **21168821.3**

(22) Date of filing: **16.04.2021**

(51) International Patent Classification (IPC):
**B64G 1/10** $^{(2006.01)}$

(52) Cooperative Patent Classification (CPC):
**B64G 1/10**; B64G 1/242

(54) **METHOD OF SATELLITE PRECISE ORBIT DETERMINATION USING PARALLACTIC REFRACTION SCALE FACTOR ESTIMATION**

VERFAHREN ZUR PRÄZISEN BESTIMMUNG DER UMLAUFBAHN VON SATELLITEN UNTER VERWENDUNG DER SCHÄTZUNG DES PARALLAKTISCHEN REFRAKTIONSSKALENFAKTORS

PROCÉDÉ DE DÉTERMINATION D'ORBITE PRÉCISE DE SATELLITE À L'AIDE DE L'ESTIMATION DE FACTEUR D'ÉCHELLE A RÉFRACTION PARALLACTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.05.2020 KR 20200056809**

(43) Date of publication of application:
**24.11.2021 Bulletin 2021/47**

(73) Proprietor: **Korea Astronomy and Space Science Institute**
**Daejeon 34055 (KR)**

(72) Inventor: **CHOI, Eun Jung**
**34071 Daejeon (KR)**

(74) Representative: **TBK**
**Bavariaring 4-6**
**80336 München (DE)**

(56) References cited:
KR-A- 20120 075 961    KR-A- 20160 059 729
KR-B1- 102 140 000    US-A1- 2007 273 581

- **LERCH FRANCIS J. ' ET AL: "EFFECT OF PARALLACTIC REFRACTION CORRECTION ON STATION HEIGHT DETERMINATION", GODDARD SPACE FLIGHT CENTER, 1 January 1973 (1973-01-01), pages 1-25, XP055797741,**
- **RAOL J R ET AL: "On the Orbit Determination Problem", IEEE TRANSACTIONS ON AEROSPACE AND ELECTRONIC SYSTEMS, IEEE SERVICE CENTER, PISCATAWAY, NJ, US, vol. AES-10, no. 3, 1 May 1985 (1985-05-01), pages 274-291, XP011167998, ISSN: 0018-9251**

**Description**

CROSS REFERENCE TO RELATED APPLICATION

The present application claims priority to Korean Patent Application No. 10-2020-0056809, filed May 15, 2020.

BACKGROUND OF THE INVENTION

Field of the Invention

The present invention relates to a method of precisely determining the orbit of a satellite in the field of space situational Awareness (SSA) and, more particularly, to a method of precisely determining the orbit of a satellite by simultaneously estimating the satellite position and velocity vector and a parallactic refraction scale factor.

Description of the Related Art

As of November 2019, nearly 20,000 artificial space objects including satellites, are orbiting above the earth, and the number of satellites is continuously increasing due to continuous space development. As a result, a risk of an artificial satellite falling to the ground or a risk of a collision between an artificial satellite and space debris is increasing. Accordingly, it is necessary to develop a technology for tracking and monitoring the artificial space objects that can damage Korea space assets or threaten social safety and national security.
The optical surveillance method (see e.g. document KR20160059729, which is typically used for tracking and monitoring the artificial space objects, is a method of determining the orbit by taking sunlight reflected off satellites, in a similar way to astronomical observation.
In order to determine the orbit of the satellite using an optical observation system, it is necessary for an observation model to improve the accuracy of estimation obtained from observation errors that best reflect actual observations. The optical observation data converts an image coordinate into a celestial coordinate using a star catalog, in such a manner as to extract the position coordinate of the satellite on the basis of stars in an image observed. In addition to commercial software such as the Orbit Determination Tool Kit (ODTK) of AGI, most satellite orbit determination software programs take into consideration only a light travel time and an aberration phenomenon, as an general optical observation model.
In other words, the satellite optical observation in the related art calculates the right ascension and declination of the satellite, on the basis of the right ascension and declination of a star in an image taken in a snapshot. In this process, since the observed refractive index of the satellite is corrected assuming that the observed refractive index of the satellite located close to the earth is the same as the refractive index of light of a star in the distance, excessive refraction correction is performed, which results in errors appearing as parallactic refraction effects.
Therefore, the optical observation model in the related art does not take into account the parallactic refraction effect, and thus has a problem of inferior precision when applied to satellite orbit determination.

SUMMARY OF THE INVENTION

Accordingly, the present invention has been made keeping in mind the above problems occurring in the related art, and an objective of the present invention is to provide a method of satellite precise orbit determination, the method being configured to be capable of precisely determining an orbit of a satellite by estimating and correcting the scale factor for reflecting the parallactic refraction effect in the satellite optical observation model, simultaneously with the satellite position and velocity vector.
In order to achieve the above objective, a method of satellite precise orbit determination using parallactic refraction scale factor estimation according to the present invention includes inputting an initial estimate including initial orbit information of a satellite with respect to an observation epoch and the parallactic refraction scale factor; performing orbit propagation using a high-precision orbit propagator by applying a dynamics model; performing observer-centered satellite optical observation modeling including the parallactic refraction scale factor; calculating an observation residual between actual optical observation data and observation data calculated via the observation modeling reflecting the parallactic refraction; and precisely determining the orbit of the satellite by estimating the parallactic refraction scale factor and a satellite state vector using a batch least square estimation algorithm.
The inputting of the initial estimate may include inputting initial estimation parameters for the satellite including an epoch, position, velocity, and inputting an initial value of the parallactic refraction scale factor.
The initial value of the parallactic refraction scale factor may be an initial ratio value of an arbitrary constant.
The initial orbit information of the satellite may be used as an osculating orbital element with the orbit being determined or a mean orbital element (two-line element (TLE)), in which the mean orbital element is used after conversion to the osculating orbital element.

The applying of the dynamics model may include performing orbit integration by applying the high-precision orbit propagator in Cowell's method of numerical integration that reflects a dynamics model.

In the satellite optical observation modeling in the performing of the observer-centered satellite optical observation modeling, a right ascension and a declination may be calculated, in which the parallactic refraction is applied to corrected values of an observer-centered right ascension and declination and a scale factor for estimating the parallactic refraction is included.

The actual optical observation data in the calculating of the observation residual may be observation data of the observer-centered right ascension and declination values of the satellite, which are extracted on the basis of an observation epoch and the right ascension and declination of a star in an image.

The determining of the orbit of the satellite may include estimating the parallactic refraction scale factor and the satellite position and velocity state vector simultaneously in such a manner as to minimize a residual between the actual observation data and the calculated observation value using a batch least square estimation algorithm, and terminating iterative calculations when a convergence condition is satisfied by using a root mean square calculated through the iterative calculations, thereby precisely determining the orbit of the satellite.

According to the present invention, it is possible to precisely determine an orbit of a satellite by estimating and correcting the scale factor for reflecting the parallactic refraction effect in the satellite optical observation model, simultaneously with the satellite position and velocity vector.

BRIEF DESCRIPTION OF THE DRAWINGS

The above and other objectives, features, and other advantages of the present invention will be more clearly understood from the following detailed description when taken in conjunction with the accompanying drawings, in which:

FIG. 1 is a flowchart showing a method of satellite precise orbit determination using parallactic refraction scale factor estimation according to the present invention;

FIG. 2 is a graph showing observation residuals for parallactic refraction effect in determining an orbit of a satellite using actual satellite optical observation data according to the present invention; and

FIG. 3 is a graph showing a prediction error when orbit prediction is performed by using satellite precise orbit determination data which is determined using parallactic refraction scale factor estimation, according to the present invention.

DETAILED DESCRIPTION OF THE INVENTION

Hereinafter, embodiments will be described in detail with reference to the accompanying drawings. However, the scope of the rights is not limited by these embodiments. The same reference numerals in each drawing indicate the same members. The terms used in the description below have been selected as general and universal in the related technology field, but there may be other terms depending on the development and/or change of technology, customs, preferences of technicians, and the like. Therefore, terms used in the following description should not be understood as limiting the technical idea, but should be understood as exemplary terms for describing embodiments.

In addition, in certain cases, there are terms arbitrarily selected by the applicant, and in this case, detailed meanings will be described in the corresponding description. Therefore, terms used in the following description should be understood on the basis of meaning of the term and contents throughout the specification, not just the name of the term.

Hereinafter, a method of satellite precise orbit determination using parallactic refraction scale factor estimation according to an embodiment of the present invention will be described.

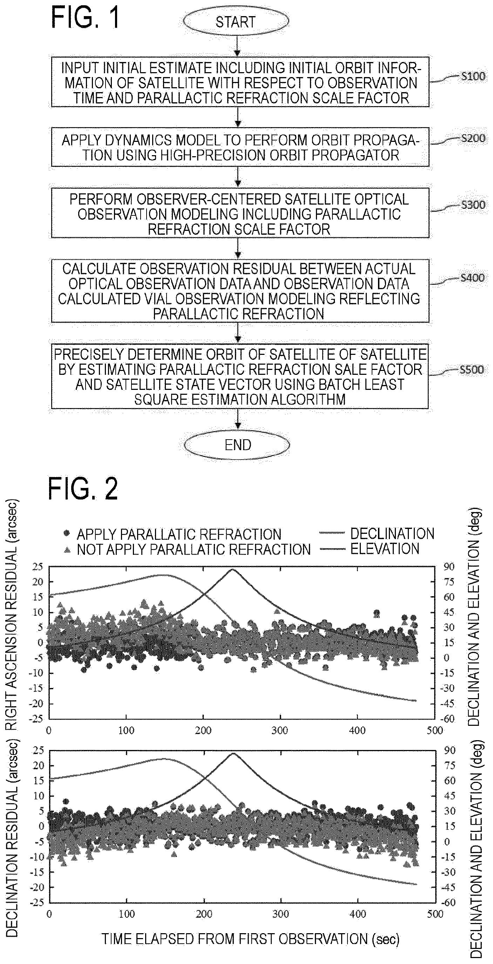

FIG. 1 is a flowchart illustrating a method of satellite precise orbit determination using parallactic refraction scale factor estimation according to the present invention.

Referring to FIG. 1, a method of satellite precise orbit determination using parallactic refraction scale factor estimation according to the present invention is configured to include inputting an initial estimate including initial orbit information of the satellite with respect to the observation time and a parallactic refraction scale factor (S100), performing orbit propagation using a high-precision orbit propagator by applying a dynamics model (S200), performing observer-centered satellite optical observation modeling including the parallactic refraction scale factor (S300), calculating an observation residual between the actual optical observation data and observation data calculated via the observation modeling reflecting the parallactic refraction (S400), and precisely determining the orbit of the satellite by simultaneously estimating the parallactic refraction scale factor and the satellite state vector using a batch least square estimation algorithm (S500).

Here, the high-precision orbit propagator is an algorithm that obtains the position and velocity of an artificial space object at an arbitrary time, considering all perturbations that affect the artificial space object, such as the earth's gravitational field, atmospheric drag, the sun and moon gravity, and solar radiation pressure.

The method of satellite precise orbit determination using parallactic refraction scale factor estimation according to an embodiment of the present invention will be described in more detail.

First, an initial estimation parameter including initial orbit information of a satellite with respect to the observation epoch and a parallactic refraction scale factor is input (S100). Here, both of the initial orbit information of the satellite and the parallactic refraction scale factor may be used as estimation parameters. That is, data representing initial estimation parameters for the satellite including an epoch, position, and velocity may be input, and an initial value of the parallactic refraction scale factor may be input. Herein, an initial ratio value of an arbitrary constant may be applied to the initial value of the parallactic refraction scale factor.

Meanwhile, the position and velocity data, which is the orbit information of the satellite, may be an osculating orbital element generated through orbit determination processing using previous epoch observation data, or may be a mean orbital element (two-line element (TLE)). Here, the mean orbital element may be used after conversion to the osculating orbital element.

Next, orbit propagation is performed using a high-precision orbit propagator that applies a dynamics model (S200). That is, orbit integration is performed by applying the high-precision orbit propagator in Cowell's method of numerical integration that reflects a dynamics model, thereby calculating the satellite position and velocity for the next epoch.

Here, the dynamics model may accurately model perturbation due to the earth's gravitational potential, perturbation due to the sun and moon gravity, perturbation due to solar radiation pressure, perturbation due to the earth's atmospheric density, and the like.

Next, satellite optical observation modeling centered on the observer, which is associated with a parallactic refraction scale factor, is performed (S300). Herein, the observation modeling is performed in such a manner as to convert the state vector obtained from the dynamics model into observation data. The right ascension and declination of the satellite are calculated on the basis of the right ascension and declination of a star in an image taken as an observation snapshot, due to the nature of optical observation. Herein, in the right ascension and declination values of the satellite provided from the observation data, the distance difference between the satellite and the star is not corrected. Therefore, according to the present invention, in the case of objects close to the earth, such as satellites, an over-corrected value through correction using refraction for the star is adjusted so that the observation direction points to the satellite.

Since the satellite optical observation is given in terms of right ascension and declination values, the parallactic refraction correction used for analysis as a modeling error is as follows.

The ceiling $Z$ of the satellite is $Z = Z_0 - \triangle R$, and the parallactic refraction used for modeling correction is $\triangle R = 2.1 \tan Z / \rho \cos Z (radians)$. Here, $\rho$ indicates the distance (m) between the station and the satellite.

Accordingly, the right ascension $\alpha$ and declination $\delta$ obtained from the optical observation data may consist of a sum of corrections according to observation modeling as shown in Equation 1. That is, the calculation is performed by applying the parallactic refraction to corrected values of the right ascension and declination centered on the observer, and including the scale factor for estimating the same.

[Equation 1]

$$t = t_0 + \varepsilon_{LT}$$

$$\alpha = \alpha_0 + \varepsilon_{Aaberr\_RA} + \varepsilon_{Daberr\_RA} + \Delta t \cdot \dot{\alpha} + K \cdot \Delta R \frac{\sin q}{\cos \delta_0}$$

$$\delta = \delta_0 + \varepsilon_{Aaberr\_DEC} + \varepsilon_{Daberr\_DEC} + \Delta t \cdot \dot{\delta} + K \cdot \Delta R \cos q$$

Where, ' denotes an observation epoch; $\varepsilon_{LT}$ denotes a light time delay; $\alpha_0$ and $\delta_0$ denote right ascension and declination in the J2000 coordinate system, respectively;

$$\varepsilon_{Aaberr\_RA}$$

and

$$\varepsilon_{Daberr\_RA}$$

denote corrections of annual aberration and diurnal aberration for the right ascension, respectively;

$$\varepsilon_{Aaberr\_DEC}$$

and

$$\varepsilon_{Daberr\_DEC};$$

denote corrections of annual aberration and diurnal aberration for the declination, respectively; $\Delta t$ denotes a time bias correction value; $\alpha$ and $\delta$ denote a ratio of right ascension to declination; $\Delta R$ denotes parallactic refraction; $q$ denotes a parallactic angle; and K(K=15.35*P/460+T) denotes a parallactic refraction scale factor. Herein, a value of K is a parameter affected by temperature and pressure and estimated in the present invention.

Next, an observation residual between actual optical observation data obtained through the actual optical observation and data calculated by observation modeling reflecting the parallactic refraction is calculated (S400). Here, the actual optical observation data may be observation data of an observer-centered right ascension and declination value of the satellite, which is extracted on the basis of the observation epoch and the right ascension and declination of the star in the image.

Next, the parallactic refraction scale factor and a satellite state vector are simultaneously estimated using a batch least square estimation algorithm, thereby precisely determining the orbit of the satellite (S500). In other words, the parallactic refraction scale factor and the satellite position and velocity state vector are simultaneously estimated in such a manner as to minimize a residual between the actual observed data and the calculated observation value using the batch least square estimation algorithm. Finally, when the convergence condition is satisfied by using a root mean square (RMS) calculated through iterative calculation, the iterative calculations are terminated, thereby precisely determining the orbit of the satellite.

FIG. 2 is a graph showing observation residuals for parallactic refraction effect in determining an orbit of a satellite using actual satellite optical observation data according to the present invention. Assuming that an observed noise of a satellite in a sun-synchronous orbit at an altitude of 550 km is 3 arcseconds (1$^\sigma$) at a specific observation site (latitude of 36.1639 degrees, longitude of 128.9760 degrees, and height of 1139.2 m), FIG. 2 shows a case where the parallactic refraction is applied and a case where the parallactic refraction is not applied when observing one pass. Herein, the parallactic refraction scale factor having a value of one is applied. Blue dots indicate cases where the parallactic refraction is applied to the orbit determination, and red dots indicate cases where the parallactic refraction is not applied. When the parallactic refraction is not applied to the observation modeling to determine the orbit, the residual in right ascension increases in a section with the highest declination value, and the residual in declination increases at altitudes less than or equal to 30 degrees. The case where the parallactic refraction is applied to the orbit determination shows a stable result.

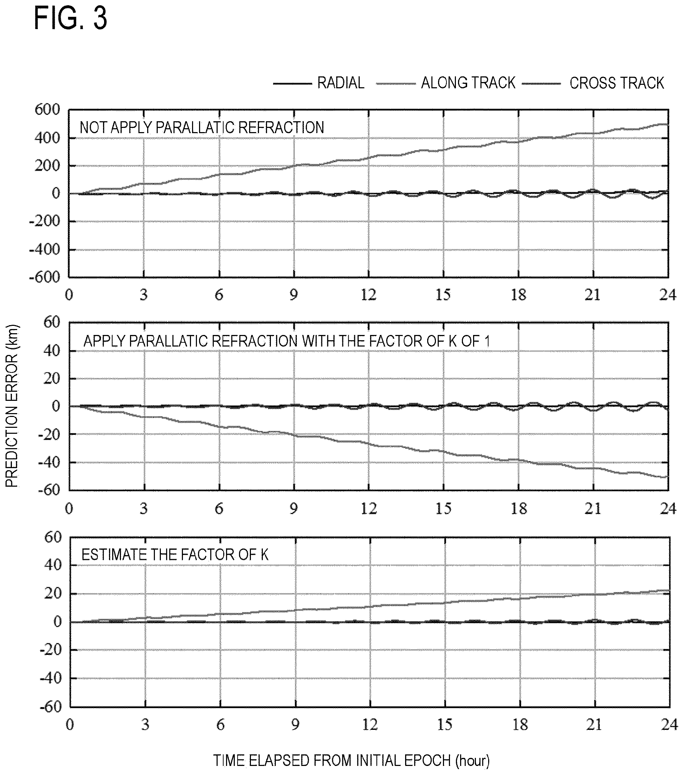

FIG. 3 is a graph showing a prediction error when orbit prediction is performed, using precise determination data of the satellite's orbit, determined through estimation of a parallactic refraction scale factor according to the present invention, which describes the orbit prediction errors when the parallactic refraction scale factor is estimated simultaneously with the satellite position and velocity vector. FIG. 3 shows orbit prediction errors for 24 hours, when the parallactic refraction is not applied, when a constant value is applied without prediction, and when a parallactic refraction scale factor is estimated simultaneously with the satellite position and velocity vector, respectively, as a comparison result with the precision orbit prediction power (position error 20cm(1)) of the KOMPSAT-5 satellite. When the parallactic refraction scale factor is estimated and applied to the orbit determination, the orbit prediction error is significantly reduced.

Although the embodiments of the present invention have been described in detail above, the scope of the present invention is not limited thereto, and various modifications and improvements performed by those skilled in the art using the basic concept of the present invention defined in the following claims.

**Claims**

1.  A method of satellite precise orbit determination, the method comprising:

    inputting an initial estimate including initial orbit information of a satellite with respect to an observation epoch and a parallactic refraction scale factor;
    performing orbit propagation using a high-precision orbit propagator by applying a dynamics model;
    performing observer-centered satellite optical observation modeling including the parallactic refraction scale factor;
    calculating an observation residual between actual optical observation data and observation data calculated via the observation modeling reflecting the parallactic refraction; and
    precisely determining the orbit of the satellite by simultaneously estimating the parallactic refraction scale factor and a satellite state vector using a batch least square estimation algorithm.

2.  The method of claim 1, wherein the inputting of the initial estimate includes inputting initial estimation parameters for the satellite including an epoch, position, velocity, and inputting an initial value of the parallactic refraction scale factor.

3.  The method of claim 2, wherein the initial value of the parallactic refraction scale factor is an initial ratio value of an arbitrary constant.

4.  The method of claim 1, wherein the initial orbit information of the satellite is used as an osculating orbital element with the orbit being determined or a mean orbital element (two-line element (TLE)), in which the mean orbital element is used after conversion to the osculating orbital element.

5.  The method of claim 1, wherein the applying of the dynamics model includes performing orbit integration by applying the high-precision orbit propagator in Cowell's method of numerical integration that reflects a dynamics model.

6.  The method of claim 1, wherein in the satellite optical observation modeling in the performing of the observer-centered satellite optical observation modeling, a right ascension ($\alpha$) and a declination ($\delta$) are calculated according to Equation 1, in which the parallactic refraction is applied to corrected values of an observer-centered right ascension and declination and a scale factor for estimating the parallactic refraction is included:

    [Equation 1]

    $$\alpha = \alpha_0 + \varepsilon_{Aaberr\_RA} + \varepsilon_{Daberr\_RA} + \Delta t \cdot \dot{\alpha} + K \cdot \Delta R \frac{\sin q}{\cos \delta_0}$$

    $$\delta = \delta_0 + \varepsilon_{Aaberr\_DEC} + \varepsilon_{Daberr\_DEC} + \Delta t \cdot \dot{\delta} + K \cdot \Delta R \cos q$$

    where, $\alpha_o$ and $\delta_o$ denote a right ascension and declination in the J2000 coordinate system, respectively;

    $$\varepsilon_{Aaberr\_RA}$$

    and

    $$\varepsilon_{Daberr\_RA}$$

    denote corrections of annual aberration and diurnal aberration for the right ascension, respectively;

$$\varepsilon_{A\delta\alpha rr\_DBC}$$

and

$$\varepsilon_{D\delta\alpha rr\_DBC} :$$

denote corrections of annual aberration and diurnal aberration for the declination, respectively; $\Delta t$ denotes a time bias correction value; $\dot{\alpha}$ and $\dot{\delta}$ denote a ratio of right ascension to declination; $\Delta R$ denotes parallactic refraction; $q$ denotes a parallactic angle; and K denotes a parallactic refraction scale factor.

7. The method of claim 1, wherein the actual optical observation data in the calculating of the observation residual is observation data of the observer-centered right ascension and declination values of the satellite, which are extracted on the basis of an observation epoch and the right ascension and declination of a star in an image.

8. The method of claim 1, wherein the determining of the orbit of the satellite includes estimating the parallactic refraction scale factor and the satellite position and velocity state vector simultaneously in such a manner as to minimize a residual between the actual observation data and the calculated observation value using a batch least square estimation algorithm, and terminating iterative calculations when a convergence condition is satisfied by using a root mean square calculated through the iterative calculations, thereby precisely determining the orbit of the satellite.

**Patentansprüche**

1. Verfahren zur präzisen Bestimmung einer Satellitenbahn, wobei das Verfahren Folgendes aufweist:

Eingeben einer anfänglichen Schätzung, die anfängliche Bahninformationen eines Satelliten mit Bezug auf eine Beobachtungsepoche und einen parallaktischen Refraktionsskalierungsfaktor einschließt;
Durchführen einer Bahnpropagation unter Verwendung eines hochpräzisen Bahnpropagators durch Anwenden eines Dynamikmodells;
Durchführen einer beobachterzentrierten optischen Satellitenbeobachtungsmodellierung, die den parallaktischen Refraktionsskalierungsfaktor einschließt;
Berechnen eines Beobachtungsresiduums zwischen tatsächlichen optischen Beobachtungsdaten und Beobachtungsdaten, die mittels der Beobachtungsmodellierung unter Berücksichtigung der parallaktischen Refraktion berechnet werden; und
präzises Bestimmen der Bahn des Satelliten durch gleichzeitiges Schätzen des parallaktischen Refraktionsskalierungsfaktors und eines Satellitenzustandsvektors unter Verwendung eines Batch-Kleinste-Quadrate-Schätzalgorithmus.

2. Verfahren nach Anspruch 1, wobei das Eingeben der anfänglichen Schätzung ein Eingeben von anfänglichen Schätzungsparametern für den Satelliten einschließlich einer Epoche, einer Position, einer Geschwindigkeit, und ein Eingeben eines Anfangswerts des parallaktischen Refraktionsskalierungsfaktors umfasst.

3. Verfahren nach Anspruch 2, wobei der Anfangswert des parallaktischen Refraktionsskalierungsfaktors ein anfänglicher Verhältniswert einer beliebigen Konstante ist.

4. Verfahren nach Anspruch 1, wobei die anfänglichen Bahninformationen des Satelliten als ein mit der zu bestimmenden Bahn oskulierendes Bahnelement oder ein mittleres Bahnelement (Two-Line-Element (TLE)) verwendet werden, in welchem das mittlere Bahnelement nach Umwandlung in das oskulierende Bahnelement verwendet wird.

5. Verfahren nach Anspruch 1, wobei das Anwenden des Dynamikmodells ein Durchführen der Bahnintegration durch Anwenden des hochpräzisen Bahnpropagators in der Cowell'schen Methode der numerischen Integration, die ein Dynamikmodell widerspiegelt, umfasst.

6. Verfahren nach Anspruch 1, wobei in der optischen Satellitenbeobachtungsmodellierung bei der Durchführung der beobachterzentrierten optischen Satellitenbeobachtungsmodellierung eine Rektaszension ($\alpha$) und eine Deklination ($\delta$) gemäß Gleichung 1 berechnet werden, in welcher die parallaktische Refraktion auf korrigierte Werte einer beobachterzentrierten Rektaszension und Deklination angewendet wird und ein Skalierungsfaktor zur Schätzung der parallaktischen Refraktion enthalten ist:

[Gleichung 1]

$$\alpha = \alpha_0 + \varepsilon_{Aaberr\_RA} + \varepsilon_{Daberr\_RA} + \Delta t \cdot \dot{\alpha} + K \cdot \Delta R \frac{\sin q}{\cos \delta_0}$$

$$\delta = \delta_0 + \varepsilon_{Aaberr\_DEC} + \varepsilon_{Daberr\_DEC} + \Delta t \cdot \dot{\delta} + K \cdot \Delta R \cos q$$

wobei $\alpha_o$ und $\delta_o$ jeweils eine Rektaszension und eine Deklination in dem J2000-Koordinatensystem bezeichnen; $\varepsilon_{Aaberr\_RA}$ und $\varepsilon_{Daberr\_RA}$ jeweils Korrekturen der jährlichen Aberration und der täglichen Aberration für die Rektaszension bezeichnen; $\varepsilon_{Aaberr\_DEC}$ und $\varepsilon_{Daberr\_DEC}$ jeweils Korrekturen der jährlichen Aberration und der täglichen Aberration für die Deklination bezeichnen; $\Delta t$ einen Zeitfehlerkorrekturwert bezeichnet; $\dot{\alpha}$ und $\dot{\delta}$, ein Verhältnis von Rektaszension zu Deklination bezeichnen; $\Delta R$ eine parallaktische Refraktion bezeichnet; $q$ einen parallaktischen Winkel bezeichnet; und K einen parallaktischen Refraktionsskalierungsfaktor bezeichnet.

7. Verfahren nach Anspruch 1, wobei die tatsächlichen optischen Beobachtungsdaten bei der Berechnung des Beobachtungsresiduums Beobachtungsdaten der beobachterzentrierten Rektaszensions- und Deklinationswerte des Satelliten sind, welche auf der Grundlage einer Beobachtungsepoche und der Rektaszension und Deklination eines Sterns in einem Bild extrahiert werden.

8. Verfahren nach Anspruch 1, wobei das Bestimmen der Bahn des Satelliten ein gleichzeitiges Schätzen des parallaktischen Refraktionsskalierungsfaktors und des Satelliten-Positions-und-Geschwindigkeitszustandsvektors unter Verwendung eines Batch-Kleinste-Quadrate-Schätzalgorithmus in einer solchen Weise, dass ein Residuum zwischen den tatsächlichen Beobachtungsdaten und dem berechneten Beobachtungswert minimiert wird, und ein Beenden der iterativen Berechnungen, wenn eine Konvergenzbedingung unter Verwendung eines durch die iterativen Berechnungen berechneten quadratischen Mittelwerts erfüllt ist, umfasst, wodurch die Bahn des Satelliten präzise bestimmt wird.

**Revendications**

1. Procédé de détermination d'orbite précise de satellite, le procédé comprenant :

   la fourniture en entrée d'une estimée initiale comprenant des informations d'orbite initiales d'un satellite par rapport à une époque d'observation et d'un facteur d'échelle de réfraction parallactique ;
   l'exécution d'une propagation d'orbite à l'aide d'un propagateur d'orbite de haute précision par application d'un modèle dynamique ;
   l'exécution d'une modélisation d'observation optique par satellite centrée sur l'observateur, qui comprend le facteur d'échelle de réfraction parallactique ;
   le calcul d'une résiduelle d'observation entre des données d'observation optiques réelles et des données d'observation calculées par l'intermédiaire de la modélisation d'observation faisant intervenir la réfraction parallactique ; et
   la détermination précise de l'orbite du satellite par estimation simultanée du facteur d'échelle de réfraction parallactique et d'un vecteur d'état du satellite à l'aide d'un algorithme d'estimation des moindres carrés par lots.

2. Procédé selon la revendication 1, dans lequel la fourniture en entrée de l'estimée initiale comprend la fourniture en entrée de paramètres d'estimation initiaux pour le satellite, comprenant une époque, une position, une vitesse, et la fourniture en entrée d'une valeur initiale du facteur d'échelle de réfraction parallactique.

3. Procédé selon la revendication 2, dans lequel la valeur initiale du facteur d'échelle de réfraction parallactique est une valeur de rapport initiale d'une constante arbitraire.

4. Procédé selon la revendication 1, dans lequel les informations d'orbite initiales du satellite sont utilisées en tant qu'élément orbital osculateur avec l'orbite en cours de détermination ou en tant qu'élément orbital moyen (élément à deux lignes (TLE)), dans lequel l'élément orbital moyen est utilisé après conversion en l'élément orbital osculateur.

5. Procédé selon la revendication 1, dans lequel l'application du modèle dynamique comprend l'exécution d'une intégration d'orbite par application du propagateur d'orbite de haute précision dans la méthode d'intégration numérique de Cowell qui fait intervenir un modèle dynamique.

6. Procédé selon la revendication 1, dans lequel, dans la modélisation d'observation optique du satellite lors de l'exécution de la modélisation d'observation optique du satellite centrée sur l'observateur, une ascension droite (a) et une déclinaison (d) sont calculées selon l'équation 1, dans laquelle la réfraction parallactique est appliquée à des valeurs corrigées d'une ascension droite et d'une déclinaison centrées sur l'observateur et dans laquelle un facteur d'échelle permettant d'estimer la réfraction parallactique est inclus :

[Équation 1]

$$\alpha = \alpha_0 + \varepsilon_{Aaberr\_RA} + \varepsilon_{Daberr\_RA} + \Delta t \cdot \dot{\alpha} + K \cdot \Delta R \frac{\sin q}{\cos \delta_0}$$

$$\delta = \delta_0 + \varepsilon_{Aaberr\_DEC} + \varepsilon_{Daberr\_DEC} + \Delta t \cdot \dot{\delta} + K \cdot \Delta R \cos q$$

où $a_0$ et $d_0$ désignent respectivement une ascension droite et une déclinaison dans le système de coordonnées J2000 ; et

$\varepsilon_{Aaberr\_RA}$ et $\varepsilon_{Daberr\_RA}$ désignent respectivement des corrections de l'aberration annuelle et de l'aberration diurne pour l'ascension droite ; $\varepsilon_{Aaberr\_DEC}$ et $\varepsilon_{Daberr\_DEC}$ désignent respectivement des corrections de l'aberration annuelle et de l'aberration diurne pour la déclinaison ; $\Delta t$ désigne une valeur de correction du biais temporel ; $\dot{\alpha}$ et $\dot{\delta}$ désignent un rapport de l'ascension droite à la déclinaison ; $\Delta R$ désigne la réfraction parallactique ; $q$ désigne un angle parallactique ; et K désigne un facteur d'échelle de réfraction parallactique.

7. Procédé selon la revendication 1, dans lequel les données d'observation optiques réelles du calcul de la résiduelle d'observation sont des données d'observation des valeurs d'ascension droite et de déclinaison du satellite centrées sur l'observateur, qui sont extraites sur la base d'une époque d'observation et de l'ascension droite et de la déclinaison d'une étoile dans une image.

8. Procédé selon la revendication 1, dans lequel la détermination de l'orbite du satellite comprend l'estimation simultanée du facteur d'échelle de réfraction parallactique et du vecteur d'état de position et de vitesse du satellite de manière à minimiser une résiduelle entre des données d'observation réelles et la valeur d'observation calculée à l'aide d'un algorithme d'estimation des moindres carrés par lots, et l'arrêt des calculs itératifs lorsqu'une condition de convergence est satisfaite par utilisation d'une moyenne quadratique calculée par le biais des calculs itératifs, déterminant ainsi avec précision l'orbite du satellite.

# FIG. 1

START

INPUT INITIAL ESTIMATE INCLUDING INITIAL ORBIT INFOR-
MATION OF SATELLITE WITH RESPECT TO OBSERVATION
TIME AND PARALLACTIC REFRACTION SCALE FACTOR — S100

APPLY DYNAMICS MODEL TO PERFORM ORBIT PROPAGA-
TION USING HIGH-PRECISION ORBIT PROPAGATOR — S200

PERFORM OBSERVER-CENTERED SATELLITE OPTICAL
OBSERVATION MODELING INCLUDING PARALLACTIC
REFRACTION SCALE FACTOR — S300

CALCULATE OBSERVATION RESIDUAL BETWEEN ACTUAL
OPTICAL OBSERVATION DATA AND OBSERVATION DATA
CALCULATED VIAL OBSERVATION MODELING REFLECTING
PARALLACTIC REFRACTION — S400

PRECISELY DETERMINE ORBIT OF SATELLITE OF SATELLITE
BY ESTIMATING PARALLACTIC REFRACTION SALE FACTOR
AND SATELLITE STATE VECTOR USING BATCH LEAST
SQUARE ESTIMATION ALGORITHM — S500

END

# FIG. 2

- APPLY PARALLATIC REFRACTION — DECLINATION
- NOT APPLY PARALLATIC REFRACTION — ELEVATION

RIGHT ASCENSION RESIDUAL (arcsec)

DECLINATION AND ELEVATION (deg)

DECLINATION RESIDUAL (arcsec)

DECLINATION AND ELEVATION (deg)

TIME ELAPSED FROM FIRST OBSERVATION (sec)

# FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200056809
- KR 20160059729